# EUROPEAN PATENT APPLICATION

(11) **EP 4 614 619 A1**
(43) Date of publication of application: **10.09.2025**
(21) Application number: 24895173.3
(22) Date of filing: 29.04.2024
(51) Int. Cl.: H01M 4/58

(54) **LITHIUM MANGANESE IRON PHOSPHATE POSITIVE ELECTRODE MATERIAL, PREPARATION METHOD THEREFOR, AND LITHIUM-ION BATTERY**

(30) Priority: 29.12.2023 CN 202311864311
(71) Applicant: Beijing Easpring Material Technology Co., Ltd., Beijing 100160 (CN)
(72) Inventor: ZHANG, Hang, Beijing 100160 (CN); LIU, Yafei, Beijing 100160 (CN); WANG, Youqiang, Beijing 100160 (CN); ZHANG, Xuequan, Beijing 100160 (CN); CHEN, Yanbin, Beijing 100160 (CN)
(74) Representative: Nederlandsch Octrooibureau
(86) International application number: PCT/CN2024/090684
(87) International publication number: WO 2025/138510

(57) **Abstract**

The present disclosure relates to the field of lithium-ion batteries, and discloses a lithium manganese iron phosphate cathode material, a preparation method therefor, and a lithium-ion battery thereof. A microcrystalline size Dx at (020) characteristic peak of the cathode material measured by XRD and an individual particle size Ds of the cathode material measured by SEM satisfy: 2.0≤Ds/Dx≤4.0. The lithium manganese iron phosphate cathode material can solve the technical problems associated with existing lithium manganese iron phosphate materials, such as poor kinetic diffusion capability and low high-rate charge/discharge performance.

## Description

### CROSS-REFERENCE TO RELATED APPLICATION

This application claims priority to and benefits of patent application No. 202311864311.8, filed with China National Intellectual Property Administration on December 29, 2023, the entire contents of which are incorporated herein by reference.

### FIELD

The present disclosure relates to the field of lithium-ion batteries, and more particularly, to a lithium manganese iron phosphate cathode material, a preparation method therefor, and a lithium-ion battery thereof.

### BACKGROUND

With the increasing number of electric vehicles and the gradual expansion of the energy storage market, there is growing attention in the lithium-ion battery field to both safety performance and cost. In addition to improvements in battery design technologies, the research and development of battery materials is also particularly critical. Lithium iron phosphate (LFP) materials, owing to their high safety and low cost, have gradually become the primary choice of cathode materials for electric vehicles and energy storage batteries. However, the potential for further improvement in energy density for LFP materials is already quite limited. Lithium manganese iron phosphate (LMFP) materials share a similar crystal structure with LFP and also exhibit stable chemical properties and excellent safety performance. Compared with the charge/discharge voltage platform of 3.4 V provided by Fe in LFP, the Mn in LMFP offers a higher charge/discharge voltage platform of approximately 4.1 V, thereby enabling a theoretical energy density increase of 15-20% over LFP. As a result, LMFP is considered a promising next-generation cathode material for lithium-ion batteries, offering high energy density, excellent safety, and low cost.

However, the introduction of Mn into the LMFP system significantly reduces its electronic conductivity; the conductivity of LFP is approximately 10⁻⁹ S/cm, whereas that of LMFP drops to 10⁻¹³ S/cm. Structurally, LMFP lacks a continuous network of edge-sharing FeO₆ (MnO₆) octahedra and is instead interconnected through PO₄ tetrahedra. This prevents the formation of a continuous metal-oxygen bonding framework and restricts lithium-ion transport within the one-dimensional channels, resulting in poor electronic conductivity and subsequently low high-rate charge/discharge performance.

Surface coating LMFP materials with carbonaceous materials possessing good electrical conductivity is a commonly adopted strategy to enhance their electronic conductivity capabilities. In CN106887586A, a conductive network is constructed using carbon aerogel, which is then infiltrated with a precursor solution of LMFP, followed by high-temperature sintering. This process simultaneously achieves high conductivity and uniform particle size control, significantly reducing the powder resistivity and improving charge/discharge performance. However, the construction of the carbon aerogel network complicates the process and increases costs. CN116314762A introduces carbon quantum dots containing amino groups into the coating layer and controls the mass ratio between Mn ions and these carbon quantum dots containing amino groups. This approach not only enhances conductivity but also suppresses Mn ion dissolution, thereby simultaneously improving both the conductivity and the service life of the material.

Another strategy for improvement involves morphological design of the LMFP material, specifically by reducing the size of primary particles and shortening the ion diffusion path to enhance charge/discharge performance. In CN115636402A, a solvothermal method is employed, utilizing thiol-ene click chemistry to control the oriented crystal growth of LMFP during high-temperature nucleation, thereby forming a two-dimensional structure that improves reaction kinetics. However, this approach involves the use of hydrophobic ligand solvents, which limits its feasibility for large-scale production.

### SUMMARY

An objective of the present disclosure is to overcome the deficiencies in the related art and is to provide a lithium manganese iron phosphate (LMFP) cathode material, a preparation method therefor, and a lithium-ion battery thereof. This aims to solve the technical problems associated with existing LMFP materials, such as poor kinetic diffusion capability and low high-rate charge/discharge performance.

To achieve the above objectives, a first aspect of the present disclosure provides a lithium manganese iron phosphate (LMFP) cathode material. A microcrystalline size Dx at (020) characteristic peak of the cathode material measured by X-ray diffraction (XRD) and an individual particle size Ds of the cathode material measured by scanning electron microscopy (SEM) satisfy: 2.0≤Ds/Dx≤4.0.

A second aspect of the present disclosure provides a method for preparing the above-described lithium manganese iron phosphate (LMFP) cathode material. The method includes:
step 1: dispersing manganese iron phosphate, a lithium source, a first carbon source, and an additive M' in a solvent, performing a first grinding process and drying, and performing a first sintering process in a nitrogen atmosphere to obtain a first lithium manganese iron phosphate material; and
step 2: dispersing the first lithium manganese iron phosphate material and a second carbon source in a solvent, performing a second grinding process, drying, performing second sintering process in a nitrogen atmosphere, followed by crushing and sieving, to obtain the lithium manganese iron phosphate cathode material.

The second grinding process allows a particle size to range from 70 nm to 160 nm.

A third aspect of the present disclosure provides a lithium-ion battery. The lithium-ion battery includes the above-described lithium manganese iron phosphate cathode material.

Through the above-described technical solutions, the lithium manganese iron phosphate cathode material, the preparation method therefor, and the lithium-ion battery thereof provided by the present disclosure yield the following beneficial effects:

In the present disclosure, the microcrystalline size Dx at the (020) characteristic peak of the lithium manganese phosphate cathode material and the individual particle size Ds satisfy a specific relationship, which indicates that the number of microcrystalline boundaries existing in the bulk phase of the cathode material is within an appropriate range, enabling lithium ions to rapidly deintercalate from the interior of large individual particles in the cathode material via diffusion pathways along microcrystalline boundaries, while avoiding the excessive defects within the individual particles that otherwise would lead to low crystallinity and insufficient particle strength. As a result, the LMFP cathode material achieves both high pallet density and excellent rate capability.

Further, the lithium manganese iron phosphate cathode material according to the present disclosure includes a matrix and a carbon layer present on a surface of and/or inside the matrix. The carbon layer inside the matrix of the cathode material is mainly distributed along the microcrystalline boundaries. By controlling the number of microcrystalline boundaries and further regulating the content of the carbon layer within the microcrystalline boundaries within a specific range, the present disclosure employs the carbon layer to modulate crystalline size and crystallinity of the bulk phase, thereby enhancing lithium-ion diffusion within the bulk phase and ensuring fast deintercalation of lithium ions.

Further, an appropriate amount of carbon layer content within the microcrystalline boundaries of the cathode material according to the present disclosure mitigates the disadvantages associated with oversized individual particles. By appropriately increasing the individual particle size, high pallet density is achieved, thus resolving the contradiction between improving the capacity (especially the rate capability) and increasing particle size and pallet density.

In the method for preparing a lithium manganese iron phosphate cathode material according to the present disclosure, through a crystallization-crushing-recrystallization process and controlling the particle size after crushing, the microcrystalline size Dx at the (020) characteristic peak and the individual particle size Ds of the cathode material can satisfy a specific relationship, thus improving the capacity and rate capability of the cathode material.

Further, in the method according to the present disclosure, by controlling a second sintering temperature, the relationship between the microcrystalline size Dx and the individual particle size Ds as well as the content of the carbon layer inside the matrix of the cathode material can be adjusted, enabling further improvement in capacity and rate capability of the cathode material.

The method according to the present disclosure is highly compatible with existing production lines and processes and does not require the introduction of expensive additives, processes, or equipment, thereby preserving the low-cost advantage of lithium manganese iron phosphate materials and being suitable for large-scale industrial production.

### BRIEF DESCRIPTION OF THE DRAWINGS

FIG. 1 shows an XRD pattern of the first lithium manganese iron phosphate material in Example 1.
FIG. 2 shows an SEM image of the cathode material in Example 1.
FIG. 3 shows an XRD pattern of the cathode material in Example 1.
FIG. 4 shows comparison of 0.2C charge/discharge curves between Example 1 and Comparative Example 1.
FIG. 5 shows comparison of 1C charge/discharge curves between Example 1 and Comparative Example 1.
FIG. 6 shows a material state of the cathode material in Example 1 after sintering at 400°C for 3 hours in an air atmosphere.

### DETAILED DESCRIPTION OF THE EMBODIMENTS

In the present disclosure, endpoints and any value of the ranges shall not be limited to the exact range or value, and those ranges or values should be understood to include values close to those ranges or values. For numerical ranges, endpoints of respective ranges, an endpoint and individual point value of respective ranges, and individual point values can be combined with each other to obtain one or more new numerical ranges, which should be deemed to be specifically disclosed herein.

A first aspect of the present disclosure provides a lithium manganese iron phosphate (LMFP) cathode material. A microcrystalline size Dx at (020) characteristic peak of the cathode material measured by XRD and an individual particle size Ds of the cathode material measured by SEM satisfy: 2.0≤Ds/Dx≤4.0.

In the present disclosure, the microcrystalline size Dx at the (020) characteristic peak of the lithium manganese phosphate cathode material and the individual particle size Ds satisfy a specific relationship, which indicates that the number of microcrystalline boundaries existing in the bulk phase of the cathode material is within an appropriate range, enabling lithium ions to rapidly deintercalate from the interior of large individual particles in the cathode material via diffusion pathways along microcrystalline boundaries, while avoiding the excessive defects within the individual particles that otherwise would lead to low crystallinity and insufficient particle strength. As a result, the LMFP cathode material achieves both high pallet density and excellent rate capability.

In the present disclosure, the inventors have found through research that the presence of microcrystalline boundaries within the bulk phase of the cathode material can significantly enhance both the electronic conductivity and the ionic transport capability of the bulk phase of the cathode material. It also enables LMFP materials to achieve high compaction and high conductivity characteristics, thereby fulfilling the requirements of high-energy-density and fast-charging applications. Moreover, it avoids the physical and chemical properties of high specific surface area and low pallet density associated with product designs of small-particle-size individual particles, as well as the resulting problems such as processing difficulty, intensified interfacial side reactions, and reduced electrode plate loading.

As used in the present disclosure, the term "crystallite boundary" refers to a region within a single particle of the LMFP cathode material where the crystal growth directions differ between different adjacent domains, as a result of a transition from one atomic arrangement to another or local disruptions in atomic ordering caused by the entrapment of carbon during the fusion of crystal grains. These regions with changes or discontinuity in the atomic arrangement directions caused by the above factors are defined as microcrystalline boundaries.

In the present disclosure, the ratio Ds/Dx between the microcrystalline size Dx at the (020) characteristic peak of the cathode material and the individual particle size Ds of the cathode material measured by SEM reflects the number of microcrystalline boundaries in the cathode material.

In LMFP materials, lithium ions diffuse along one-dimensional channels in the b-axis direction, which is perpendicular to the (020) crystal plane direction. A shorter diffusion distance decreases, i.e., a smaller individual crystal size along this direction, facilitates a better high-rate capability. To guarantee the pallet density of the LMFP cathode material, the primary particle size needs to be increased. The inventors have found through research that controlling the number of microcrystalline boundaries in the LMFP cathode material within a specific range enables lithium ions to rapidly deintercalate from the interior of large primary particles in the cathode material via diffusion pathways along microcrystalline boundaries, while avoiding the excessive defects within the primary particles that otherwise would lead to low crystallinity and insufficient particle strength. As a result, the LMFP cathode material achieves both high pallet density and excellent rate capability.

In the present disclosure, the microcrystalline size Dx is calculated using the Scherrer equation based on the full width at half maximum (FWHM) of the (020) peak in the XRD pattern of the cathode material.

As used in the present disclosure, for single-crystalline LMFP cathode materials, the term "individual particle size" refers to the size of the individual single crystal; for polycrystalline LMFP cathode materials, the individual particle size refers to the size of the primary particles that form secondary particles in the polycrystalline LMFP cathode materials.

In the present disclosure, the FWHM of the (020) characteristic peak of the cathode material ranges from 0.10° to 0.25°.

In the present disclosure, Ds is obtained through statistical analysis of approximately 100 randomly selected single-crystalline particles in the SEM image. For each single-crystalline particle, both the longest and shortest diagonals are measured, and the average of these two values is taken as the particle size. The shortest diagonal is oriented perpendicular to the longest diagonal. The SEM test requires random sampling of primary particles and imaging of random regions, and the resulting SEM images should represent the average morphology of the cathode material.

In the present disclosure, the microcrystalline size Dx at (020) characteristic peak of the cathode material measured by XRD and the individual particle size Ds of the cathode material measured by SEM satisfy: 2.0≤Ds/Dx≤4.0, such as 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, or any range consisting of any two of these values. Preferably, 2.0≤Ds/Dx≤3.5.

According to the present disclosure, the microcrystalline size Dx ranges from 30 nm to 70 nm.

In the present disclosure, when the microcrystalline size Dx of the LMFP cathode material satisfies the above range, the lithium-ion diffusion distance along this direction is relatively short, which is conducive to rapid ion deintercalation, that is, enhanced high-rate charge/discharge capability. Meanwhile, the control of the microcrystalline size from being too small can maintain a high degree of crystallinity of the material, preventing excessively disordered atomic arrangements and excessive defects that could cause tortuous or even blocked diffusion paths, ultimately compromising the electrochemical activity of the material.

In the present disclosure, the microcrystalline size Dx ranges from 30 nm to 70 nm, such as 30 nm, 32 nm, 34 nm, 36 nm, 38 nm, 40 nm, 42 nm, 44 nm, 46 nm, 48 nm, 50 nm, 52 nm, 54 nm, 56 nm, 58 nm, 60 nm, 62 nm, 64 nm, 66 nm, 68 nm, 70 nm, or any range consisting of any two of these values. Preferably, the microcrystalline size Dx ranges from 40 nm to 60 nm.

According to the present disclosure, the individual particle size Ds of the LMFP cathode material ranges from 80 nm to 200 nm.

In the present disclosure, when the individual particle size Ds of the LMFP cathode material satisfies the above range, the diffusion distance of lithium ions from the bulk phase through the microcrystals and microcrystalline boundaries to the particle surface is minimized, facilitating high-rate charging and discharging. Meanwhile, the control of Ds from being too small reduces the number and volume of voids between particles, contributing to a high pallet density of the material.

In the present disclosure, the individual particle size Ds ranges from 80 nm to 200 nm. For example, Ds may be 80 nm, 85 nm, 90 nm, 95 nm, 100 nm, 110 nm, 120 nm, 130 nm, 140 nm, 150 nm, 160 nm, 170 nm, 180 nm, 190 nm, 200 nm, or any range consisting of any two of these values. Preferably, the individual particle size Ds of the LMFP cathode material ranges from 100 nm to 160 nm.

According to the present disclosure, the LMFP cathode material includes a matrix and a carbon layer present on a surface of and/or inside the matrix.

In the present disclosure, the inventors have found through research that the presence of carbon layer inside the matrix, especially at the microcrystalline boundaries, can significantly enhance the bulk-phase electronic conductivity of the cathode material. During high-temperature treatment, carbon enriched at the microcrystalline boundaries inhibits excessive crystal fusion and growth. Furthermore, such high-temperature treatment repairs bulk-phase defects, promotes the formation of well-crystallized microcrystals, and ensures the rapid deintercalation of lithium ions. As a result, the LMFP cathode material with excellent high-rate charge/discharge performance can be obtained.

According to the present disclosure, the matrix has a composition represented by Formula I:

Li₁₊ₐMnₓFe_{y}M'_{z}PO₄ Formula I;

where 0≤a≤0.2, 0.3≤x<1, 0<y≤0.7, 0<z≤0.05, and 0.8≤x+y+z≤1, and M' is selected from at least one element of B, Mg, Al, Ca, Ti, V, Co, Ni, Sr, Y, Zr, Nb, Mo, and W.

In the present disclosure, in Formula I, 0≤a≤0.2, such as 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, or any range between any two values; 0.3≤x<1, such as 0.3, 0.4, 0.5, 0.6, 0.7, 0.8, 0.9, or any range consisting of any two of these values; 0<y≤0.7, such as 0.1, 0.2, 0.3, 0.4, 0.5, 0.6, 0.7, or any range consisting of any two of these values; 0<z≤0.05, such as 0.01, 0.02, 0.03, 0.04, 0.05, or any range consisting of any two of these values; 0.8≤x+y+z≤1, such as 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, or any range consisting of any two of these values.

Further, 0.01≤a≤0.1, 0.4≤x≤0.9, 0.1≤y≤0.6, 0<z≤0.03, and 0.9≤x+y+z≤0.99, and M' is selected from at least one element of Al, Ti, V, Co, Nb, and W.

According to the present disclosure, the content of the carbon coating layer ranges from 1 wt% to 2.5 wt% based on the total weight of the LMFP cathode material.

In the present disclosure, when the content of the carbon layer satisfies the above range, it can sufficiently coat the surface of the material particles, forming a complete conductive carbon network. This ensures the rapid and uniform transport of electrons into the interior of the powder material, thereby achieving excellent high-rate performance. Since the density of carbon is lower than that of LMFP, excessive carbon layer content adversely affects the pallet density of the material. Besides, carbon does not exhibit electrochemical activity within the lithiation/delithiation voltage window of LMFP and thus does not contribute to capacity. Excessive carbon content will result in a reduction in the capacity of the LMFP/carbon composite material per unit mass. Therefore, controlling the content of the carbon layer within this range allows for a balanced optimization between electrochemical performance and the powder pallet density.

In the present disclosure, the content of the carbon layer ranges from 1 wt% to 2.5 wt%, such as 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, 2.1 wt%, 2.2 wt%, 2.3 wt%, 2.4 wt%, 2.5 wt%, or any range consisting of any two of these values.

Further, the content of the carbon layer ranges from 1.4 wt% to 2.1 wt% based on the total weight of the LMFP cathode material.

According to the present disclosure, the content of the carbon layer present inside the matrix ranges from 0.05 wt% to 0.20 wt% based on the total weight of the LMFP cathode material.

In the present disclosure, the carbon layer inside the matrix is mainly distributed along the crystallite boundaries of the matrix. Specifically, the content of the carbon layer inside the matrix refers to the content of the carbon layer in the LMFP cathode material after being placed in a muffle furnace and sintered in air at 400°C for 3 hours, as measured by a carbon-sulfur analyzer.

In the present disclosure, when the content of the carbon layer present inside the matrix of the cathode material satisfies the above range, the capacity and rate capability of the cathode material can be significantly improved.

In an embodiment of the present disclosure, the specific content of the carbon layer present inside the matrix is coordinated with the number of microcrystalline boundaries (Ds/Dx). While controlling the number of microcrystalline boundaries, the content of the carbon layer within the microcrystalline boundaries is also adjusted. An appropriate content of the carbon layer inside the matrix, On the one hand, can significantly improve the bulk-phase electronic conductivity of the cathode material, and on the other hand, can effectively inhibit the crystal fusion and growth during high-temperature heat treatment. This results in the repair of bulk-phase defects, the formation of well-crystallized microcrystals, and the elimination of excessive defects in large individual particles, which otherwise would lead to low crystallinity and insufficient particle strength. Consequently, this ensures that lithium ions can rapidly diffuse via the microcrystalline boundaries, enabling an increase in individual particle size while maintaining high pallet density. Thus, the contradiction between improving the capacity (especially the rate capability) and increasing particle size and pallet density is resolved.

In the present disclosure, the content of the carbon layer present inside the matrix ranges from 0.05 wt% to 0.20 wt%, such as 0.05 wt%, 0.06 wt%, 0.07 wt%, 0.08 wt%, 0.09 wt%, 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.20 wt%, or any range consisting of any two of these values.

Further, the content of the carbon layer present inside the matrix ranges from 0.08 wt% to 0.18 wt% based on the total weight of the LMFP cathode material, more preferably, from 0.08 wt% to 0.15 wt%.

According to the present disclosure, a powder pallet density of the cathode material ranges from 2.1 g/cm³ to 2.6 g/cm³, such as 2.1 g/cm³, 2.2 g/cm³, 2.3 g/cm³, 2.4 g/cm³, 2.5 g/cm³, 2.6 g/cm³, or any range consisting of any two of these values, preferably, from 2.1 g/cm³ to 2.5 g/cm³.

A second aspect of the present disclosure provides a method for preparing the above-described lithium manganese iron phosphate (LMFP) cathode material. The method includes:
step 1: dispersing manganese iron phosphate, a lithium source, a first carbon source, and an additive M' in a solvent, performing a first grinding process and drying, and performing a first sintering process in a nitrogen atmosphere to obtain a first lithium manganese iron phosphate material; and
step 2: dispersing the first lithium manganese iron phosphate material and a second carbon source in a solvent, performing a second grinding process, drying, performing second sintering process in a nitrogen atmosphere, followed by crushing and sieving, to obtain the lithium manganese iron phosphate cathode material.

The second grinding process allows a particle size to range from 70 nm to 160 nm.

In the method for preparing a lithium manganese iron phosphate cathode material according to the present disclosure, through a crystallization-crushing-recrystallization process and controlling the particle size after crushing, the microcrystalline size Dx at the (020) characteristic peak and the individual particle size Ds of the cathode material can satisfy a specific relationship, thus improving the capacity and rate capability of the cathode material.

Specifically, in the present disclosure, the first lithium manganese iron phosphate material is obtained by the first sintering process. Thereafter, a mixture containing the first lithium manganese iron phosphate material and the second carbon source is subjected to the second grinding and crushing process. After the second sintering process, the lithium manganese iron phosphate cathode material described in the first aspect of the present disclosure is obtained. Through the processes of crystal crushing and recrystallization, as well as controlling the particle size after the second grinding process, newly formed crystal interfaces are exposed and fused to varying degrees, thereby enabling the controllable formation of microcrystalline boundaries within the cathode material.

Further, during this process, carbon sources (the first carbon source and the second carbon source, especially the second carbon source) adhere to the newly formed crystal interfaces generated during the crushing process and undergoes pyrolysis. Along with the crystal fusion, a portion of the carbon remains at the microcrystalline boundaries, forming carbon layers that enhance the bulk-phase electronic conductivity of the material. These carbon layers, enriched at the microcrystalline boundaries, can inhibit the crystal fusion and growth during high-temperature heat treatment. Furthermore, such high-temperature treatment repairs bulk-phase defects, promotes the formation of well-crystallized microcrystals, and ensures the rapid deintercalation of lithium ions. As a result, the LMFP cathode material with excellent high-rate charge/discharge performance can be obtained.

In the present disclosure, the particle size allowed by the second grinding process refers to the particle size of the mixture including the first lithium manganese iron phosphate material and the second carbon source.

In the present disclosure, the drying method in step 1 and step 2 is not specifically limited. Any conventional drying methods known in the art may be employed, such as spray drying.

In the present disclosure, the second grinding process allows the particle size to range from 70 nm to 160 nm, such as 70 nm, 72 nm, 74 nm, 76 nm, 78 nm, 80 nm, 82 nm, 84 nm, 86 nm, 88 nm, 90 nm, 92 nm, 94 nm, 96 nm, 98 nm, 100 nm, 105 nm, 110 nm, 115 nm, 120 nm, 125 nm, 130 nm, 135 nm, 140 nm, 145 nm, 150 nm, 155 nm, 160 nm, or any range consisting of any two of these values.

In the present disclosure, the method of the first grinding and the second grinding is not specifically limited. Any conventional grinding equipment known in the art may be adopted for grinding, as long as the resulting particle size meets the requirements of the present disclosure.

According to the present disclosure, a temperature of the second sintering process ranges from 600°C to 800°C, such as 600°C, 650°C, 700°C, 750°C, 800°C, or any range consisting of any two of these values.

In the present disclosure, by controlling the second sintering temperature, the relationship between the microcrystalline size Dx and the individual particle size Ds, as well as the content of the carbon layer inside the matrix of the cathode material can be adjusted, enabling further improvements in the capacity and rate capability of the cathode material.

According to the present disclosure, a duration of the second sintering process ranges from 5 hours to 20 hours, such as 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, or any range consisting of any two of these values, preferably from 8 hours to 15 hours.

According to the present disclosure, a temperature of the first sintering process ranges from 400°C to 600°C, such as 400°C, 450°C, 500°C, 550°C, 600°C, or any range consisting of any two of these values.

According to the present disclosure, a duration of the first sintering process ranges from 1 hour to 10 hours, such as 1 hour, 2 hours, 3 hours, 4 hours, 5 hours, 6 hours, 7 hours, 8 hours, 9 hours, 10 hours, or any range consisting of any two of these values, preferably from 2 hours to 6 hours.

According to the present disclosure, the first carbon source and the second carbon source are each independently selected from at least one of glucose, sucrose, fructose, cellulose, starch, citric acid, polyacrylic acid, polyethylene glycol, and dopamine.

According to the present disclosure, the first carbon source and the second carbon source have each a molecular weight independently ranging from 100 g/mol to 10000 g/mol, such as 100 g/mol, 140 g/mol, 180 g/mol, 220 g/mol, 260 g/mol, 300 g/mol, 400 g/mol, 500 g/mol, 600 g/mol, 700 g/mol, 800 g/mol, 900 g/mol, 1000 g/mol, 1100 g/mol, 1200 g/mol, 1300 g/mol, 1400 g/mol, 1500 g/mol, 2000 g/mol, 2500 g/mol, 3000 g/mol, 3500 g/mol, 4000 g/mol, 4500 g/mol, 5000 g/mol, 5500 g/mol, 6000 g/mol, 6500 g/mol. g/mol, 7000 g/mol, 7500 g/mol, 8000 g/mol, 8500 g/mol, 9000 g/mol, 9500 g/mol, 10000 g/mol, or any range consisting of any two of these values.

In the present disclosure, for small-molecule compounds such as glucose, the term "molecular weight" refers to the relative molecular mass; for high-molecular polymers such as polyacrylic acid, the term "molecular weight" refers to the weight-average molecular weight (Mw).

In the present disclosure, when employing the above-described specific types of the carbon source, or the carbon source with a specific molecular weight, the uniform coating and efficient carbonization on the surface of the lithium manganese iron phosphate material can be achieved. This reduces the material's electrical resistance while balancing the cost of different carbon sources, making it suitable for large-scale industrial production.

Further, the first carbon source and the second carbon source are each independently selected from at least one of glucose, sucrose, cellulose, citric acid, and polyethylene glycol.

According to the present disclosure, the amounts of the manganese iron phosphate, the first carbon source, and the second carbon source allow the content of the carbon layer to range from 1 wt% to 2.5 wt% based on the total weight of the lithium manganese iron phosphate cathode material.

In the present disclosure, the content of the carbon layer ranges from 1 wt% to 2.5 wt%, such as 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, 2.1 wt%, 2.2 wt%, 2.3 wt%, 2.4 wt%, 2.5 wt%, or any range consisting of any two of these values.

Further, the amounts of the manganese iron phosphate, the first carbon source, and the second carbon source allow the content of the carbon layer to range from 1.4 wt% to 2.1 wt% based on the total weight of the lithium manganese iron phosphate cathode material.

According to the present disclosure, the mass ratio of the first carbon source to the second carbon source satisfies 1:1.5 to 5, such as 1:1.5, 1:1.6, 1:1.7, 1:1.8, 1:1.9, 1:2, 1:2.1, 1:2.2, 1:2.3, 1:2.4, 1:2.5, 1:2.6, 1:2.7, 1:2.8, 1:3, 1:3.1, 1:3.2, 1:3.3, 1:3.4, 1:3.5, 1:3.6, 1:3.7, 1:3.8, 1:3.9, 1:4, 1:4.1, 1:4.2, 1:4.3, 1:4.4, 1:4.5, 1:4.6, 1:4.7, 1:4.8, 1:4.9, 1:5, or any range consisting of any two of these values.

In the present disclosure, when the amount relationship between the first carbon source and the second carbon source is controlled to satisfy the above-described range, the requirement can be satisfied for a reducing atmosphere during the first sintering process necessary for the formation of the first lithium iron manganese phosphate material. This also avoids excessive residual pyrolytic carbon generated during the first sintering, which may otherwise be stripped off during the second grinding process, forming free and inactive carbon. The second carbon source serves as the primary source for the coating carbon layer. It can fully coat the already crystallized first lithium manganese iron phosphate material, thereby minimizing the presence of inactive carbon. As a result, this significantly reduces the electrical resistance of the material and suppresses excessive side reactions with the electrolyte, ensuring optimal electrochemical performance.

According to the present disclosure, the additive M' is a compound containing at least one element selected from B, Mg, Al, Ca, Ti, V, Co, Ni, Sr, Y, Zr, Nb, Mo, and W.

In the present disclosure, the specific type of the additive M' is not specifically limited, and may be at least one of an oxide containing M', a hydroxide containing M', an oxyhydroxide containing M', a carbonate containing M', an oxalate containing M', a sulfate containing M', an acetate containing M', and a nitrate containing M'.

In the present disclosure, the type of the lithium source is not specifically limited. Any conventional lithium sources known in the art may be adopted, such as, but not limited to, at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

In the present disclosure, the type of manganese iron phosphate is not specifically limited. Any conventional manganese iron phosphate materials known in the art may be adopted.

In the present disclosure, the type of the solvent is not specifically limited, as long as the components can be fully mixed and uniformly dispersed, such as pure water.

According to the present disclosure, the amounts of the manganese iron phosphate, the lithium source, and the additive M' allow n(Li):n(Mn):n(Fe):n(M') to be 1+a:x:y:z, where 0≤a≤0.2, 0.3≤x<1, 0<y≤0.7, 0<z≤0.05, and 0.8≤x+y+z≤1.

Further, 0.01≤a≤0.1, 0.4≤x≤0.9, 0.1≤y≤0.6, 0<z≤0.03, and 0.9≤x+y+z≤0.99.

A third aspect of the present disclosure provides a lithium-ion battery. The lithium-ion battery includes the above-described lithium manganese iron phosphate cathode material.

According to the present disclosure, the ratio of the discharge capacity at 1C to the discharge capacity at 0.2 C of the lithium-ion battery is greater than or equal to 89%.

The present disclosure will be described in detail below by way of examples. In the following examples:
The crystalline properties of the lithium manganese iron phosphate cathode material were measured using X-ray diffraction (XRD). Specifically, the test method involved recording the peak position and full width at half maximum (FWHM) of the (020) diffraction peak within the 2θ range of 16°-19° in the XRD pattern of the LMFP material, and calculating the microcrystalline size Dx of the LMFP material using the Scherrer equation: D=Kλ/(β•cosθ), where K = 0.89, λ = 0.154 nm, and β represents the FWHM of the (020) peak.

The morphology and individual particle size of the LMFP cathode material were measured using scanning electron microscopy (SEM). Specifically, the test method involved capturing 30,000× magnification images of the powder material using a HITACHI S-4800 SEM (HITACHI, Japan). A total of 100 individual particles were randomly selected from the image, and the longest and shortest diagonal of each particle were measured. The average of these measurements was recorded as the individual particle size (Ds).

The composition of the LMFP cathode material was measured using inductively coupled plasma atomic emission spectroscopy (ICP-AES). Specifically, the test method involved: 0.2 g of LMFP sample was accurately weighed, mixed with acid under heat, and diluted to a constant volume. The contents of Li, Mn, Fe, P, and any additive's elements were determined using a standard calibration curve.

The content of the carbon layer in the LMFP cathode material was measured using a carbon-sulfur analyzer. Specifically, the test method involved: 0.2 g of LMFP material was accurately weighed, mixed with 2 g of combustion aid, and then placed in a high-temperature crucible. The sample was transferred into the carbon-sulfur analyzer and sintered under an oxygen atmosphere. The amount of carbon dioxide generated during sintering was detected to determine the carbon content of the material.

The content of the carbon layer inside the matrix of the LMFP cathode material was measured using a carbon-sulfur analyzer. Specifically, the test method involved: the LMFP cathode material was placed in a muffle furnace and sintered in air at 400°C for 3 hours. When the sample color changed from black or dark gray to orange, the carbon content was measured using the carbon-sulfur analyzer.

The powder pallet density of the LMFP cathode material was determined under a pressure of 3 tons (3t).

All raw materials used in the examples and comparative examples were commercially available products.

### Example 1

(1) Manganese iron phosphate, lithium carbonate, TiO₂ additive, and a first carbon source were dispersed in pure water. The amounts of the manganese iron phosphate, the lithium carbonate, and the TiO₂ additive were used such that n(Li):n(Mn):n(Fe):n(Ti):n(P) = 1.02:0.57:0.38:0.02:1. The mixture was subjected to a first grinding process, followed by spray drying, and then transferred to a nitrogen atmosphere furnace for a first sintering process at 500°C for 4 hours to obtain a first lithium manganese phosphate material.
(2) The first lithium manganese phosphate material and a second carbon source were dispersed in pure water. The mixture was subjected to a second grinding process such that the particle size was 90 nm, followed by spray drying, and then transferred to a nitrogen atmosphere furnace for a second sintering process at 700°C for 12 hours before crushing and sieving to obtain a lithium manganese iron phosphate cathode material A1.

The first carbon source was glucose with a molecular weight of 180 g/mol, and the second carbon source was polyethylene glycol with a weight-average molecular weight of 4000 g/mol. The amounts of the manganese iron phosphate, the first carbon source, and the second carbon source were used such that the content of the carbon layer was 1.7wt% based on the total weight of the lithium manganese iron phosphate cathode material. The mass ratio of the first carbon source to the second carbon source was 1:3.

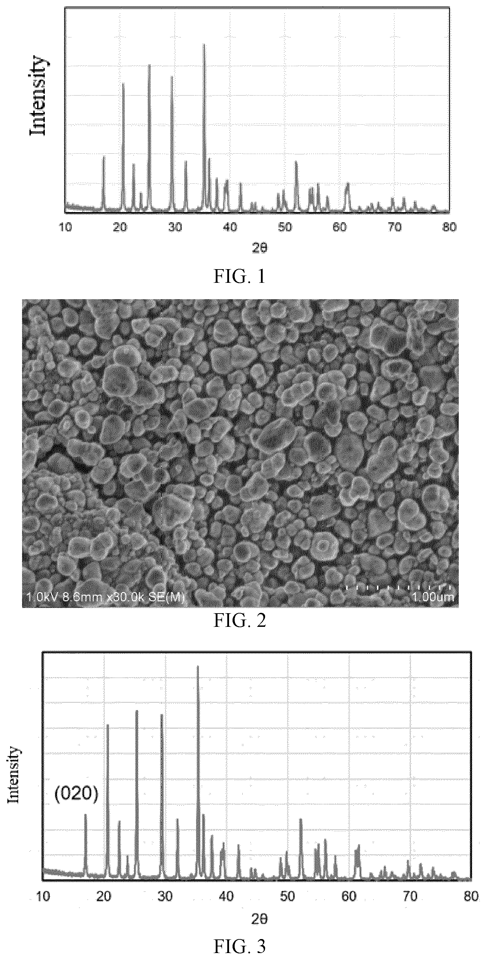

FIG. 1 shows the XRD pattern of the first lithium manganese iron phosphate material in Example 1. It can be seen from FIG. 1 that the first lithium manganese iron phosphate material obtained after the first sintering process already formed a well-crystallized lithium manganese iron phosphate material.

FIG. 2 shows the SEM image of the lithium manganese iron phosphate cathode material A1. It can be seen from FIG. 2 that the particles of the lithium manganese iron phosphate cathode material A1 were spherical or quasi-spherical in shape.

FIG. 3 shows the XRD pattern of the lithium manganese iron phosphate cathode material A1. It can be seen from FIG. 3 that the lithium manganese iron phosphate cathode material A1 had a pure phase structure of lithium manganese iron phosphate.

### Examples 2 to 4

Cathode materials A2 to A4 were prepared according to the method of Example 1. The raw material ratios and specific process conditions are shown in Table 1. All other conditions were identical to those of Example 1.

### Comparative Examples 1 and 2

Cathode materials D1 and D2 were prepared according to the method of Example 1. The raw material ratios and specific process conditions are shown in Table 1. All other conditions were identical to those of Example 1.

**Table 1**

| | | Example 1 | Example 2 | Example 3 | Example 4 | Example 5 | Example 6 |
|---|---|---|---|---|---|---|---|
| Li | mol% | 1.02 | 1.02 | 1.02 | 1.02 | 1.02 | 1.02 |
| Mn | mol% | 0.57 | 0.585 | 0.57 | 0.57 | 0.57 | 0.57 |
| Fe | mol% | 0.38 | 0.39 | 0.38 | 0.38 | 0.38 | 0.38 |
| P | mol% | 1 | 1 | 1 | 1 | 1 | 1 |
| Doping element | | Ti | V | Ti | Ti | Ti | Ti |
| Doping amount | mol% | 0.02 | 0.006 | 0.02 | 0.02 | 0.02 | 0.02 |
| First carbon source | | Glucose | Glucose | Glucose | Glucose | Citric acid | Glucose |
| Addition amount of first carbon source ^{a} | wt% | 5 | 5 | 5 | 5 | 5.5 | 5 |
| First sintering temperature | °C | 500 | 500 | 500 | 500 | 500 | 500 |
| Particle size of first lithium manganese iron phosphate material | nm | 130 | 130 | 130 | 130 | 130 | 130 |
| Second carbon source | | Polyethylene glycol | Polyethylen e glycol | Polyethylene glycol | Polyethylene glycol | Glucose | Polyethylen e glycol |
| Addition amount of second carbon source ^{b} | wt% | 15 | 15 | 15 | 15 | 7 | 15 |
| First carbon source: second carbon source | | 1:3 | 1:3 | 1:3 | 1:3 | 1:1.27 | 1:3 |
| Particle size after grinding | nm | 90 | 90 | 95 | 70 | 90 | 90 |
| Second sintering temperature | °C | 700 | 700 | 600 | 750 | 700 | 550 |

| | | | | | | | |
|---|---|---|---|---|---|---|---|
| ^{a, b}-based on the amounts of the manganese iron phosphate. | | | | | | | |

**Table 1 (continued)**

| | | Example 7 | Example 8 | Example 9 | Example 10 | Example 11 | Comparative Example 1 | Comparative Example 2 |
|---|---|---|---|---|---|---|---|---|
| Li | mol% | 1.02 | 1.02 | 1.02 | 1.02 | 1.02 | 1.02 | 1.02 |
| Mn | mol% | 0.57 | 0.57 | 0.57 | 0.76 | 0.585 | 0.57 | 0.57 |
| Fe | mol% | 0.38 | 0.38 | 0.38 | 0.19 | 0.39 | 0.38 | 0.38 |
| P | mol% | 1 | 1 | 1 | 1 | 1 | 1 | 1 |
| Doping element | | Ti | Ti | Ti | Ti | Nb | Ti | Ti |
| Doping amount | mol% | 0.02 | 0.02 | 0.02 | 0.02 | 0.006 | 0.02 | 0.02 |
| First carbon source | | Glucose | Glucose | Glucose | Glucose | Glucose | Glucose | Glucose |
| Addition amount of first carbon source ^{a} | wt% | 4 | 5 | 5.5 | 5 | 5 | 13 | 5 |
| First sintering temperature | °C | 500 | 500 | 600 | 500 | 500 | 700 | 500 |
| Particle size of first lithium manganese iron phosphate material | nm | 145 | 130 | 170 | 130 | 130 | 130 | 130 |
| Second carbon source | | Polyethyl ene glycol | Polyethyl ene glycol | Polyethyl ene glycol | Polyethyl ene glycol | Polyethyl ene glycol | / | Polyethylene glycol |
| Addition amount of second carbon source ^{b} | wt% | 17.5 | 15 | 17.5 | 15 | 15 | / | 15 |
| First carbon source: second carbon source | | 1:4.38 | 1:3 | 1:3.18 | 1:3 | 1:3 | / | 1:3 |
| Particle size after grinding | nm | 110 | 80 | 100 | 90 | 90 | / | 60 |
| Second sintering temperature | °C | 700 | 725 | 700 | 650 | 700 | / | 500 |

| | | | | | | | | |
|---|---|---|---|---|---|---|---|---|
| ^{a, b}-based on the amounts of the manganese iron phosphate. | | | | | | | | |

The compositions and physicochemical parameters of the cathode materials prepared in the Examples and Comparative Examples were tested. The results are shown in Table 2.

**Table 2**

| | Composition | Carbon Content | Carbon Content After Air Sintering |
|---|---|---|---|
| | | wt% | wt% |
| Example 1 | Li_{1.02}Mn_{0.57}Fe_{0.38}Ti_{0.02}PO₄ | 1.7 | 0.13 |
| Example 2 | Li_{1.0}Mn_{0.585}Fe_{0.39}V_{0.006}PO₄ | 1.7 | 0.15 |
| Example 3 | Li_{1.02}Mn_{0.57}Fe_{0.38}Ti_{0.02}PO₄ | 1.9 | 0.08 |
| Example 4 | Li_{1.02}Mn_{0.57}Fe_{0.38}Ti_{0.02}PO₄ | 1.5 | 0.18 |
| Example 5 | Li_{1.02}Mn_{0.57}Fe_{0.38}Ti_{0.02}PO₄ | 1.7 | 0.06 |
| Example 6 | Li_{1.02}Mn_{0.57}Fe_{0.38}Ti_{0.02}PO₄ | 2.1 | 0.05 |
| Example 7 | Li_{1.02}Mn_{0.57}Fe_{0.38}Ti_{0.02}PO₄ | 1.7 | 0.03 |
| Example 8 | Li_{1.02}Mn_{0.57}Fe_{0.38}Ti_{0.02}PO₄ | 1.6 | 0.16 |
| Example 9 | Li_{1.02}Mn_{0.57}Fe_{0.38}Ti_{0.02}PO₄ | 1.9 | 0.09 |
| Example 10 | Li_{1.02}Mn_{0.76}Fe_{0.19}Ti_{0.02}PO₄ | 1.8 | 0.11 |
| Example 11 | Li_{1.02}Mn_{0.585}Fe_{0.39}Nb_{0.006}PO₄ | 1.7 | 0.12 |
| Comparative Example 1 | Li_{1.02}Mn_{0.57}Fe_{0.38}Ti_{0.02}PO₄ | 2.1 | 0.26 |
| Comparative Example 2 | Li_{1.02}Mn_{0.57}Fe_{0.38}Ti_{0.02}PO₄ | 2.3 | 0.04 |

**Table 2 (continued)**

| | SEM Particle Size (Ds) | Full Width at Half Maximum of (020) Peak | Microcrystalli ne Size (Dx) | Ds/Dx | Powder Pallet | Powder Volume Resistivit y |
|---|---|---|---|---|---|---|
| | nm | ° | nm | / | g/cm³ | Ω·cm |
| Example 1 | 151 | 0.151 | 52.5 | 2.9 | 2.39 | 32 |
| Example 2 | 132 | 0.186 | 42.7 | 3.1 | 2.35 | 43 |
| Example 3 | 103 | 0.181 | 43.8 | 2.3 | 2.26 | 172 |
| Example 4 | 181 | 0.154 | 50.5 | 3.6 | 2.43 | 236 |
| Example 5 | 202 | 0.139 | 57.2 | 3.5 | 2.49 | 859 |
| Example 6 | 92 | 0.246 | 32.2 | 2.9 | 2.16 | 3925 |
| Example 7 | 160 | 0.145 | 54.8 | 2.9 | 2.37 | 96 |
| Example 8 | 168 | 0.156 | 50.9 | 3.3 | 2.40 | 48 |
| Example 9 | 155 | 0.128 | 62.1 | 2.5 | 2.35 | 58 |
| Example 10 | 131 | 0.168 | 47.3 | 2.8 | 2.22 | 171 |
| Example 11 | 142 | 0.155 | 51.2 | 2.8 | 2.32 | 89 |
| Comparative Example 1 | 150 | 0.262 | 30.3 | 4.3 | 2.30 | 2287 |
| Comparative Example 2 | 71 | 0.218 | 36.5 | 1.9 | 2.11 | 5279 |

### Test Example

The lithium manganese iron phosphate cathode materials prepared in the Examples and Comparative Examples were assembled into button batteries. Specifically, the assembly method was as follows. A composite lithium manganese iron phosphate cathode active material for non-aqueous electrolyte secondary batteries, acetylene black, and polyvinylidene difluoride (PVDF) were mixed according to a mass ratio of 90%:5%:5%, coated onto aluminum foil, dried, and punched into positive electrode plates with a diameter of 12 mm and a thickness of 120 µm under a pressure of 100 MPa. Then the positive electrode plates were placed in a vacuum drying oven and dried at 120°C for 12 hours.

A Li metal sheet with a diameter of 17 mm and a thickness of 1 mm was used as a negative electrode. A polyethylene porous membrane with a thickness of 25 µm was used as a separator. A mixture containing an equal amount of 1 mol/L LiPF₆, ethylene carbonate (EC), and diethyl carbonate (DEC) was used as an electrolyte.

The positive electrode plate, the separator, the negative electrode plate, and the electrolyte were used to assemble a 2025-type button battery in an Ar gas glove box with both water and oxygen contents less than 5 ppm. The resulting battery was regarded as an unactivated battery.

The electrochemical performance of the button battery was tested. Specifically, the test method involved: After resting the button battery for 2 hours, the open-circuit voltage was allowed to stabilize. The battery was were then charged at a current density of 0.1C to a cut-off voltage of 4.35 V, followed by constant-voltage charging for 30 minutes. Afterward, the battery was discharged to a cut-off voltage of 2.5 V at the same current density. This charge/discharge cycle was repeated once more, and the battery at this stage was considered activated. The activated battery was subsequently subjected to charge/discharge testing at different rates of 0.2C/0.2C, 0.5C/0.5C, and 1C/1C. The charge/discharge capacities under each rate were recorded, and the ratio of discharge capacity at 1C to that at 0.2C was used as an index for evaluating rate capability. The test results are shown in Table 3.

**Table 3**

| | 0.2C Charge Capacity | 0.2C Discharge Capacity | Initial Coulombic Efficiency | 1C/0.2C |
|---|---|---|---|---|
| | mAh/g | mAh/g | % | % |
| Example 1 | 155.4 | 150.3 | 96.7 | 95.1 |
| Example 2 | 154.5 | 149.4 | 96.7 | 94.6 |
| Example 3 | 155.0 | 148.5 | 95.8 | 93.9 |
| Example 4 | 152.4 | 147.1 | 96.5 | 93.2 |
| Example 5 | 150.7 | 143.6 | 95.3 | 91.4 |
| Example 6 | 150.6 | 145.6 | 96.7 | 92.0 |
| Example 7 | 154.2 | 148.9 | 96.6 | 92.0 |
| Example 8 | 155.0 | 149.2 | 96.3 | 93.5 |
| Example 9 | 153.4 | 148.6 | 96.9 | 93.2 |
| Example 10 | 150.4 | 144.5 | 96.1 | 87.7 |
| Example 11 | 153.6 | 148.7 | 96.8 | 92.9 |
| Comparative Example 1 | 148.9 | 140.8 | 94.2 | 86.0 |
| Comparative Example 2 | 149.8 | 144.5 | 94.7 | 90.5 |

It can be seen from above Table 1 to Table 3 that the method provided by the present disclosure is applicable to different doping schemes (Example 1, Example 2, and Example 11), and also applicable to lithium manganese iron phosphate materials with different Mn/Fe ratios (Example 10).

Compared with the single-step sintered material (Comparative Example 1), the cathode materials after the second sintering process repairing local defects in the method provided by the present disclosure (Example 1, Example 3, Example 4, Example 7, Example 8, and Example 9) exhibited narrower FWHM of the (020) peak, significant improvement in crystallinity, larger microcrystalline sizes, and a moderate number of microcrystalline boundaries. This enabled larger particle sizes and higher compaction while achieving superior capacity and rate capability.

Example 3 showed that when the particle size of the ground material was similar, lowering the second sintering temperature and weakening the fusion between particles can reduce the number of microcrystalline boundaries and internal residual carbon, but the particle size was reduced, which was not conducive to compaction.

Example 7 showed that after increasing the particle size of the ground material, with the increase in the ratio of the second carbon source to the first carbon source, the mutual fusion and growth between particles was inhibited and the content of the internal carbon was significantly reduced. However, the particle size of the finished cathode material was only slightly increased, and the crystallinity of the material remains unaffected, thus slightly deteriorating the kinetic performance. In contrast, in Example 9, increasing the amount of the first carbon source and the sintering temperature enhanced the crystalline integrity of the material during the first sintering process, which enabled the microcrystalline size of the finished product to be increased. Also, with an appropriate increase in the internal residual carbon, the kinetics performance was improved compared with Example 7, although still not as good as in Example 1.

Examples 8 and 4 showed that reducing the particle size of the ground material and increasing the second sintering temperature can strengthen the crystallization of the particle bulk phase, increase the interfacial fusion between particles, and form more microcrystalline boundaries and internal residual carbon. The particle size was also increased, which was conducive to compaction. However, it can be seen that under the premise of larger particle sizes, the cathode materials of Example 8 and Example 4 still exhibited ideal capacity and rate capability thanks to high crystallinity, microcrystalline boundaries, and residual carbon.

Example 5 showed that, when the types and ratios of the first carbon source and the second carbon source were adjusted such that the addition amount of the second carbon source was low, the coating on the surface of the lithium manganese iron phosphate material was not uniform, which easily led to the direct fusion and growth of adjacent lithium manganese iron phosphate crystals, resulting in a significant increase in the individual particle size of the finished product. Also, it was not conducive for the residual carbon to remain within the crystals, leading to poor rate capability.

Example 6 showed that if the second sintering temperature was too low, the fusion degree between the lithium manganese iron phosphate crystals was significantly reduced, the particle size growth was insufficient, and the compaction was poor. In addition, due to the low treatment temperature and insufficient crystallinity, the rate capability was not as good as that of the preferred conditions in Example 1.

Comparative Example 2 showed that merely reducing the particle size of the ground material under a low second sintering temperature failed to achieve the improvement in the bulk-phase crystallinity or promote the formation of microcrystalline boundaries and internal residual carbon by the fusion between particles. Consequently, the rate capability was poor, and the small particle size led to low compaction.

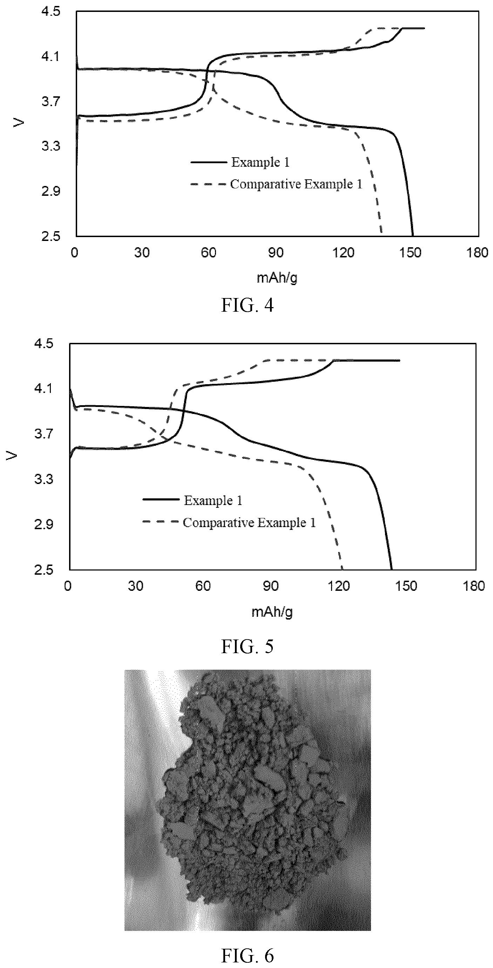

FIG. 4 shows comparison of 0.2C charge/discharge curves between button batteries assembled with the cathode materials of Example 1 and Comparative Example 1. It can be seen from FIG. 4 that the material from Comparative Example 1, which was not subjected to second sintering and recrystallization to repair internal defects, had excessive microcrystalline boundaries within the particles, resulting in poor crystallinity. Even at a low rate of 0.2C, its capacity was not fully utilized, and its discharge plateau retention was inferior to that of Example 1.

FIG. 5 shows comparison of 1C charge/discharge curves between button batteries assembled with the cathode materials of Example 1 and Comparative Example 1. It can be seen from FIG. 5 that due to the above defects, the lithium diffusion kinetics of Comparative Example 1 was severely limited. The constant current charge capacity ratio was significantly reduced, the discharge plateau nearly disappeared, and the capacity was far below that of Example 1.

FIG. 6 shows a material state of the lithium manganese iron phosphate cathode material in Example 1 after sintering at 400°C for 3 hours in an air atmosphere. It can be seen from FIG. 6 that the material surface color change towards orange indicated that the surface carbon layer had been burned off. A carbon content testing was performed on this material, and the test result reflected the residual carbon within the material.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

## Claims

1. A lithium manganese iron phosphate cathode material, wherein a microcrystalline size Dx at (020) characteristic peak of the cathode material measured by XRD and an individual particle size Ds of the cathode material measured by SEM satisfy: 2.0≤Ds/Dx≤4.0.

2. The lithium manganese iron phosphate cathode material according to claim 1, wherein 2.0≤Ds/Dx≤3.5.

3. The lithium manganese iron phosphate cathode material according to claim 1 or 2, wherein the microcrystalline size Dx ranges from 30 nm to 70 nm, and preferably, from 40 nm to 60 nm.

4. The lithium manganese iron phosphate cathode material according to any one of claims 1 to 3, wherein the individual particle size Ds ranges from 80 nm to 200 nm, and preferably, from 100 nm to 160 nm.

5. The lithium manganese iron phosphate cathode material according to any one of claims 1 to 4, wherein a full width at half maximum of the (020) characteristic peak of the cathode material ranges from 0.10° to 0.25°.

6. The lithium manganese iron phosphate cathode material according to any one of claims 1 to 5, comprising:
a matrix; and
a carbon layer present on a surface of and/or inside the matrix.

7. The lithium manganese iron phosphate cathode material according to claim 6, wherein the matrix has a composition represented by Formula I:
Li₁₊ₐMnₓFe_{y}M'_{z}PO₄ Formula I,
where:
0≤a≤0.2, 0.3≤x<1, 0<y≤0.7, 0<z≤0.05, and 0.8≤x+y+z≤1; and
M' is selected from at least one element of B, Mg, Al, Ca, Ti, V, Co, Ni, Sr, Y, Zr, Nb, Mo, and W.

8. The lithium manganese iron phosphate cathode material according to claim 6 or 7, wherein a content of the carbon layer ranges from 1.0 wt% to 2.5 wt% based on a total weight of the lithium manganese iron phosphate cathode material;
preferably, a content of the carbon layer present inside the matrix ranges from 0.05 wt% to 0.20 wt% based on the total weight of the lithium manganese iron phosphate cathode material, and preferably, from 0.08 wt% to 0.18 wt%.

9. The lithium manganese iron phosphate cathode material according to any one of claims 1 to 8, wherein a powder pallet density of the cathode material ranges from 2.1 g/cm³ to 2.6 g/cm³.

10. A method for preparing the lithium manganese iron phosphate cathode material according to any one of claims 1 to 9, the method comprising:
step 1: dispersing manganese iron phosphate, a lithium source, a first carbon source, and an additive M' in a solvent, performing a first grinding process and drying, and performing a first sintering process in a nitrogen atmosphere, to obtain a first lithium manganese iron phosphate material; and
step 2: dispersing the first lithium manganese iron phosphate material and a second carbon source in a solvent, performing a second grinding process and drying, and performing a second sintering process in a nitrogen atmosphere, followed by crushing and sieving, to obtain the lithium manganese iron phosphate cathode material,
wherein the second grinding process allows a particle size to range from 70 nm to 160 nm.

11. The method according to claim 10, wherein a temperature of the second sintering process ranges from 600°C to 800°C.

12. The method according to claim 10 or 11, wherein a duration of the second sintering process ranges from 5 hours to 20 hours.

13. The method according to any one of claims 10 to 12, wherein a temperature of the first sintering process ranges from 400°C to 600°C.

14. The method according to any one of claims 10 to 13, wherein a duration of the first sintering process ranges from 1 hour to 10 hours.

15. The method according to any one of claims 10 to 14, wherein the first carbon source and the second carbon source are each independently selected from at least one of glucose, sucrose, fructose, cellulose, starch, citric acid, polyacrylic acid, polyethylene glycol, and dopamine;
preferably, the first carbon source and the second carbon source have each a molecular weight independently ranging from 100 g/mol to 10,000 g/mol.

16. The method according to any one of claims 10 to 15, wherein amounts of the manganese iron phosphate, the first carbon source, and the second carbon source allow a content of the carbon layer to range from 1 wt% to 2.5 wt% based on a total weight of the lithium manganese iron phosphate cathode material.

17. The method according to any one of claims 10 to 16, wherein a mass ratio of the first carbon source to the second carbon source is 1: 1.5 to 5.

18. The method according to any one of claims 10 to 17, wherein the additive M' is a compound containing at least one element selected from B, Mg, Al, Ca, Ti, V, Co, Ni, Sr, Y, Zr, Nb, Mo, and W.

19. The method according to any one of claims 10 to 18, wherein amounts of the manganese iron phosphate, the lithium source, and the additive M' allow n(Li):n(Mn):n(Fe):n(M') to be 1+a:x:y:z.

20. A lithium-ion battery, comprising the lithium manganese iron phosphate cathode material according to any one of claims 1 to 9.

21. The lithium-ion battery according to claim 20, wherein a ratio of discharge capacity at 1C to discharge capacity at 0.2 C of the lithium-ion battery is greater than or equal to 89%.
